(19) Europäisches Patentamt
European Patent Office
Office européen des brevets

(11) Veröffentlichungsnummer: **0 089 314**
**B1**

# (12) EUROPÄISCHE PATENTSCHRIFT

(45) Veröffentlichungstag der Patentschrift: **19.02.86**

(51) Int. Cl.⁴: **C 08 L 67/02**, C 08 K 3/34

(21) Anmeldenummer: **83810100.4**

(22) Anmeldetag: **10.03.83**

(54) **Flammwidrige verstärkte thermoplastische Polyesterformmasse und deren Verwendung.**

(30) Priorität: **16.03.82 CH 1638/82**

(43) Veröffentlichungstag der Anmeldung: **21.09.83 Patentblatt 83/38**

(45) Bekanntmachung des Hinweises auf die Patenterteilung: **19.02.86 Patentblatt 86/8**

(84) Benannte Vertragsstaaten: **CH DE FR GB IT LI NL**

(56) Entgegenhaltungen:
**DE - A - 2 222 545**
**DE - A - 2 256 699**

**Chemical Abstracts Band 78, Nr. 14, 9. April 1973, Columbus, Ohio, USA, Seite 45, Spalte 1, Abstract Nr. 85398u**
**Chemical Abstracts Band 82, Nr. 10, 10. März 1975, Columbus, Ohio, USA, Seite 81, Spalte 2, Abstract Nr. 59132r**

(73) Patentinhaber: **CIBA-GEIGY AG, Klybeckstrasse 141, CH-4002 Basel (CH)**

(72) Erfinder: **Breitenfellner, Franz, Dr., Konrad-Adenauer-Strasse 56, D-6140 Bensheim 1 (DE)**

**EP 0 089 314 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft eine verstärkte, flammwidrig ausgerüstete thermoplastische Polyesterformmasse, die zur Unterdrückung des Abtropfens geschmolzener, gegebenenfalls brennender Tropfen zusätzlich Xonotlit enthält.

Flammwidrig ausgerüstete thermoplastische Polyester, die zusätzlich verstärkt sind, werden vorwiegend im Bereich der Elektrotechnik eingesetzt. Thermoplastische Polyesterformmassen neigen stark zur Bildung von geschmolzenen und gegebenenfalls brennenden Tropfen beim Brennvorgang. Solche Formmassen erfüllen damit aber vielfach nicht die an solche Werkstoffe gestellten Sicherheitsbestimmungen und sie können deshalb nur in beschränktem Umfang eingesetzt werden.

Es ist bekannt, dass zur Unterdrückung des Abtropfens der sich unter Einwirkung einer offenen Flamme bildenden Schmelze dieser verstärkten Formmassen bestimmte feinteilige Silikate (DE-OS 2 408 531), Kieselsäurederivate (DE-OS 2 226 931) oder Füllstoffe mit einem Länge/Durchmesserverhältnis von mehr als 50 verwendet werden können. Beispiele für solche Zusätze sind Kaolin, Talkum, Bentonit, Glaskugeln, oberflächenaktive Kieselsäure, oligomeres Natriumsilikat, Asbest, Graphit- oder Glasfasern. Diese Zusätze haben verschiedene Nachteile. So sind sie erst bei höheren Konzentrationen ausreichend wirksam, was wegen der hohen Mengen gleichzeitig eine Erniedrigung der Zähigkeitseigenschaften bedeutet. In einigen Fällen (besonders Kieselsäuren) ist die Dosierung und Verteilung im Polymer sehr schwierig. Bei Natriumsilikat beobachtet man eine unerwünschte Viskositätserniedrigung. Gegen die Verwendung von Asbest bestehen toxikologische Bedenken.

Aufgabe vorliegender Erfindung ist es, einen Zusatzstoff zur Unterdrückung der Tropfneigung aufzuzeigen, der die erwähnten Nachteile nicht aufweist und insbesondere schon bei vergleichsweise geringen Zusatzmengen wirksam ist.

Gegenstand vorliegender Erfindung ist eine verstärkte, flammwidrige Formmasse, enthaltend neben üblichen Zusätzen einen Verstärkerfüllstoff, einen thermoplastischen Polyester und als flammhemmenden Zusatz organische Halogenverbindungen alleine oder zusammen mit einer Verbindung eines Elementes der fünften Hauptgruppe des Periodensystems, besonders von Phosphor oder Antimon, die dadurch gekennzeichnet ist, dass die Formmasse, bezogen auf das Gesamtgewicht, 0,2-10 Gew.-% Xonotlit enthält.

Für die erfindungsgemässen Formmassen geeignete lineare thermoplastische Polyester sind bevorzugt kristallin bzw. teilkristallin und weisen in diesem Fall insbesondere Schmelzpunkte von mindestens 150 °C auf. Sie können jedoch auch in amorpher Form vorliegen, wobei dann der Polyester bevorzugt eine Glasumwandlungstemperatur von mindestens 70 °C, besonders mindestens 100 °C, aufweist. Die Intrinsic Viskosität der Polyester beträgt vorzugsweise mindestens 0,6 dl/g., insbesondere mindestens 0,8 dl/g.

Bei den Polyestern kann es sich um Homo- oder Mischpolyester handeln, die aus aliphatischen, cycloaliphatischen oder aromatischen Dicarbonsäuren und Diolen oder Hydroxycarbonsäuren aufgebaut sind. Ferner sind auch Mischungen dieser Polyester geeignet. Ihre Zusammensetzung richtet sich im wesentlichen nach den gewünschten Eigenschaften für einen bestimmten Verwendungszweck.

Die aliphatischen Dicarbonsäuren können 2 bis 40 C-Atome, die cycloaliphatischen Dicarbonsäuren 6 bis 10 C-Atome, die aromatischen Dicarbonsäuren 8 bis 14 C-Atome, die aliphatischen Hydroxycarbonsäuren 2 bis 12 C-Atome und die aromatischen wie cycloaliphatischen Hydroxycarbonsäuren 7 bis 14 C-Atome enthalten.

Die aliphatischen Diole können 2 bis 12 C-Atome, die cycloaliphatischen Diole 5 bis 8 C-Atome und die aromatischen Diole 6 bis 16 C-Atome enthalten.

Als aromatische Diole werden jene bezeichnet, bei denen zwei Hydroxygruppen an einen oder verschiedene aromatische Kohlenwasserstoffreste gebunden ist.

Ferner is es möglich, dass die Polyester mit geringen Mengen, z.B. 0,1 bis 3 Mol.-%, bezogen auf die vorhandenen Dicarbonsäuren, mehr als zweifunktionellen Monomeren (z.B. Pentaerythrit oder Trimellitsäure) verzweigt sind.

Bei Polyestern aus mindestens 3 Monomeren können diese statistisch verteilt sein oder es kann sich um Blockpolymere handeln.

Geignete Dicarbonsäuren sind lineare und verzweigte gesättigte aliphatische Dicarbonsäuren, aromatische Dicarbonsäuren und cycloaliphatische Dicarbonsäuren.

Als aliphatische Dicarbonsäuren kommen jene mit 2 bis 40 C-Atomen in Frage, z.B. Oxalsäure, Malonsäure, Dimethylmalonsäure, Bernsteinsäure, Octadecylbernsteinsäure, Pimelinsäure, Adipinsäure, Trimethyladipinsäure, Sebacinsäure, Azelainsäure und Dimersäure (Dimerisationsprodukte von ungesättigten aliphatischen Carbonsäuren wie Ölsäure), alkylierte Malon- und Bernsteinsäuren wie Octadecylbernsteinsäure.

Als cycloaliphatische Dicarbonsäuren kommen in Frage:

1,3-Cyclobutandicarbonsäure, 1,3-Cyclopentandicarbonsäure, 1,3- und 1,4-Cyclohexandicarbonsäure, 1,3- und 1,4-Dicarboxylmethylcyclohexan, 4,4'-Dicyclohexyldicarbonsäure.

Als geeignete aromatische Dicarbonsäuren kommen in Frage:

Insbesondere Terephthalsäure, Isophthalsäure, o-Phthalsäure, sowie 1,3-, 1,4-, 2,6- oder 2,7-Naphthalindicarbonsäure, 4,4'-Diphenyldicarbonsäure, 4,4'-Diphenylsulfondicarbonsäure, 1,1,3-Trimethyl-5-carboxyl-3-(p-carboxylphenyl)-indan, 4,4'-Diphenylätherdicarbonsäure, Bis-p-(carboxyphenyl)methan.

Bevorzugt sind die aromatischen Dicarbonsäuren unter ihnen besonders Terephthalsäure, Isophthalsäure und Orthophthalsäure.

Weitere geeignete Dicarbonsäuren sind jene, die -CO-NH-Gruppen enthalten; sie sind in der DT-OS 2 414 349 beschrieben. Auch Dicarbonsäuren, die N-heterocyclische Ringe enthalten, sind geeignet, z.B. solche, die sich von carboxylalkylierten, carboxylphenylierten oder carboxybenzylierten Monoamino-s-triazindicarbonsäuren (vgl. DT-OS 1 121 184

und 2 533 675), Mono- oder Bishydantoinen, gegebenenfalls halogenierten Benzimidazolonen oder Parabansäure ableiten. Die Carboxylalkylgruppe kann hierbei 3 bis 30 C-Atome enthalten.

Geeignete aliphatische Diole sind die linearen und verzweigten aliphatischen Glykole, besonders die mit 2 bis 12, insbesondere 2 bis 6 Kohlenstoffatomen im Molekül, z.B.: Ätnylenglykol, 1,2- und 1,3-Propylenglykol, 1,2-, 1,3-, 2,3- oder 1,4-Butandiol, Pentylglykol, Neopentylglykol, 1,6-Hexandiol, 1,12-Dodecandiol. Ein geeignetes cycloaliphatisches Diol ist z.B. 1,4-Dihydroxycyclohexan. Weitere geeignete aliphatische Diole sind z.B. 1,4-Dihydroxymethylcyclohexan, aromatisch-aliphatische Diole wie p-Xylylenglykol oder 2,5-Dichlor-p-xylylenglykol, 2,2-(β-Hydroxyäthoxyphenyl)propan sowie Polyoxa-alkylenglykol wie Diäthylenglykol, Triäthylenglykol oder Polyäthylenglykol. Die Alkylendiole sind bevorzugt linear und enthalten insbesondere 2 bis 4 Kohlenstoffatome.

Bevorzugte Diole sind die Alkylendiole, 1,4-Dihydroxycyclohexan und 1,4-Dihydroxymethylcyclohexan. Insbesondere bevorzugt sind Äthylenglykol und 1,4-Butandiol.

Weitere geeignete aliphatische Diole sind die β-hydroxyalkylierten, besonders β-hydroxyäthylierten Bisphenole wie 2,2-Bis-[4'-(β-hydroxyäthoxy)-phenyl]-propan. Weitere Bisphenole sind später genannt.

Eine weitere Gruppe von geeigneten aliphatischen Diolen sind die in den deutschen Offenlegungsschriften 1 812 003, 2 342 432, 2 342 372 und 2 453 325 beschriebenen heterocyclischen Diole. Beispiele sind: N,N'-Bis-(β-hydroxyäthyl-5,5-dimethyl)hydantoin, N,N'-Bis-(β-hydroxypropyl-5,5-dimethyl)hydantoin, Methylen-bis-[N,N'-(β-hydroxyäthyl)-5-methyl-5-äthylhydantoin], Methylen-bis-[N-(β-hydroxyäthyl)-5,5-dimethylhydantoin], N,N'-Bis-(β-hydroxyäthyl)-benzimidazolon, -(tetrachlor)-benzimidazolon oder -(tetrabrom)-benzimidazolon.

Als aromatische Diole kommen einkernige Diphenole in Betracht und besonders zweikernige, die an jedem aromatischen Kern eine Hydroxylgruppe tragen. Unter aromatisch werden bevorzugt kohlenwasserstoffaromatische Reste wie z.B. Phenylen oder Naphthylen verstanden. Neben z.B. Hydrochinon sind besonders die Bisphenole zu nennen, die durch die folgende Formel dargestellt werden können:

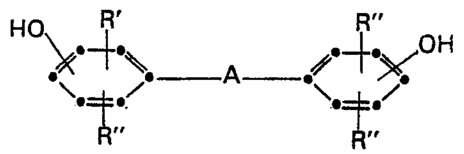

Die Hydroxygruppen können sich in m-Stellung, besonders aber in p-Stellung befinden, R' und R'' können in dieser Formel Alkyl mit 1 bis 6 C-Atomen, Halogen wie Chlor oder Brom und insbesondere Wasserstoffatome bedeuten. A kann für eine direkte Bindung stehen, oder O, S, $SO_2$, gegebenenfalls substituiertes Alkyliden, Cycloalkyliden oder Alkylen bedeuten.

Beispiele für gegebenenfalls substituierte Alkyliden sind: Äthyliden, 1,1- oder 2,2-Propyliden, 2,2-Butyliden, 1,1-Isobutyliden, Pentyliden, Hexyliden, Heptyliden, Octyliden, Dichloräthyliden, Trichloräthyliden.

Beispiele für gegebenenfalls substituiertes Alkylen sind Methylen, Äthylen, Phenylmethylen, Diphenylmethylen, Methylphenylmethylen. Beispiele für Cycloalkyliden sind Cyclopentyliden, Cyclohexyliden, Cycloheptyliden und Cyclooctyliden.

Beispiel für Bisphenole sind: Bis-(p-hydroxyphenyl)äther oder -thioäther, Bis-(p-hydroxyphenyl)-sulfon, Bis-(p-hydroxyphenyl)methan, 1,2-Bis-(p-hydroxyphenyl)-äthan, 1-Phenyl-bis-(p-hydroxyphenyl)methan, Diphenyl-bis-(p-hydroxyphenyl)methan, Diphenyl-bis-(p-hydroxyphenyl)methan, 2,2-Bis-(4'-hydroxy-3'-dimethylphenyl)-propan, 1,1- oder 2,2-Bis-(p-hydroxyphenyl)butan, 1,1-Dichlor- oder 1,1,1-Trichlor-2,2-bis(p-hydroxyphenyl)-äthan, 1,1-Bis-(p-hydroxyphenyl)cyclopentan und besonders 2,2-Bis-(p-hydroxyphenyl)propan (Bisphenol-A) und 1,1-Bis-(p-hydroxyphenyl)cyclohexan (Bisphenol-C).

Geeignete Polyester von Hydroxycarbonsäuren sind z.B. Polycaprolacton, Polypivalolacton oder die Polyester von 4-Hydroxycyclohexancarbonsäure oder 4-Hydroxybenzoesäure.

Polyester mit aromatischen Dicarbonsäuren haben die grösste Bedeutung erlangt, insbesonder die Polyalkylenterephthalate. Bevorzugt sind daher erfindungsgemässe Formmassen, in denen der Polyester aus mindestens 30 Mol.-%, vorzugsweise mindestens 40 Mol.-%, aromatischen Dicarbonsäuren und zu mindestens 30 Mol.-%, vorzugsweise mindestens 40 Mol.-%, aus Alkylendiolen mit bevorzugt 2 bis 12 C-Atomen aufgebaut ist, bezogen auf den Polyester.

Insbesondere ist in diesem Fall das Alkylendiol linear und enthält 2 bis 6 C-Atome, wie z.B. Äthylen-, Tri-, Tetra- oder Hexamethylenglykol und die aromatische Dicarbonsäure Terephthal- und/oder Isophthalsäure. Besonders bevorzugt sind als Polyester Polyäthylen- und Poly-1,4-butylenterephthalat sowie Copolyester auf der Basis von Polyäthylen- und Poly-1,4-butylenterephthalat.

Die erfindungsgemässe Formmasse enthält einen verstärkenden (faserförmigen) Füllstoff, z.B. Asbestfasern, Kohlenstoffasern oder insbesondere Glasfasern. Die Gesamtmenge an verstärkendem Füllstoff und weiteren Zusätzen beträgt bevorzugt höchstens 60 Gew.-%, bezogen auf die Gesamtmasse. Die Füllstoffe können mit einem Haftvermittler beschichtet sein, um deren Bindung an den Polyester zu verbessern. Die Menge des Verstärkerfüllstoffes beträgt vorzugsweise 5 bis 50, besonders 10 bis 40 Gew.-%.

Die erfindungsgemässe Formmasse enthält vorzugsweise 5 bis 30 Gew.-%, besonders 5 bis 20 Gew.-%, bezogen auf das Gesamtgewicht, eines flammhemmenden Zusatzes.

Geeignete flammhemmende Zusätze sind z.B. organische Halogenverbindungen, besonders Chlor- oder Bromverbindungen, die alleine oder zusammen mit synergistisch wirkenden Verbindungen mit Elementen der fünften Hauptgruppe des Periodensystems, besonders von Phosphor- und Antimonverbindungen, insbesondere Antimontrioxid, verwendet werden.

Flammschutzmittel auf der Basis von organischen chlor- und/oder besonders bromhaltigen Verbindungen sind bekannt. Es kann sich hierbei um solche handeln, die dem Kunststoff als Mischkomponente einverleibt sind, oder um solche, die als reaktive Monomere in die Polymermoleküle eingebaut sind. Beispiele für letztere sind Tetrachlorphthalsäureanhydrid, Dichlorterephthalsäure oder deren Niederalkylester, Tetrabromphthalsäureanhydrid, Tetrabrombisphenol-A, N,N′-Bis-(β-hydroxyäthyl)tetrachlor- oder tetrabrombenzimidazolon.

Weitere Beispiele für chlor- und/oder bromhaltige Verbindungen sind: Bromierte Polystyrole, z.B. Polytribromstyrol, Polypentabromstyrol, Decabromdiphenyl, Tetrabromdiphenyl, Hexabromdiphenyläther, Octabromdiphenyläther, Decabromdiphenyläther, Tetrabromdiphenylsulfid, Hexabromdiphenylsulfon, 3-(2′,4′,6′-Tribromphenoxy)-1,2-propandiol, Di- oder Tetrabromphthalsäure bzw. deren Anhydride, Dibromterephthalsäure, hydroxyäthyliertes Di- oder Tetrabrombisphenol-A, Tetrabrom-1,4-(dihydroxymethyl)-benzol, Tetrabrombenzimidazolon, N,N′-Alkylen-bis-tetrabromphthalimid sowie die chloranalogen Verbindungen. Weitere organische Halogenverbindungen sind z.B. in der deutschen Offenlegungsschrift 2 242 450 beschrieben.

In einer bevorzugten Ausführungsform enthält die erfindungsgemässe Formmasse 84,8-46 Gew.-% thermoplastischen Polyester, 5-20 Gew.-% flammhemmenden Zusatz, 10-30 Gew.-% Glasfasern und 0,2-4 Gew.-% Xonotlit.

Bei dem erfindungsgemäss verwendeten Xonotlit kann es sich um natürlich vorkommenden Xonotlit handeln, der die Summenformel $5CaO \cdot 5SiO_2 \cdot H_2O$ aufweist. Es können aber auch synthetische Xonotlitphasen eingesetzt werden, insbesondere solche, die durch Hydrothermalsynthese erhalten werden. Hier handelt es sich um Produkte, die im Wassergehalt nur wenig differieren, aber die gleiche äussere Erscheinungsform aufweisen. Beispiele sind $5CaO \cdot 3SiO_2 \cdot 1{,}25H_2O$ oder $5CaO \cdot 5SiO_2 \cdot 5/6H_2O$. Xonotlit ist von nadelförmiger Gestalt mit Partikelgrössen im Mikronbereich. Die Nadeln verfilzen zu Agglomeraten.

Das Xonotlit wird vorzugsweise in Mengen von 0,2-6, besonders 0,2-4 Gew.-% eingesetzt. Es wurde gefunden, dass bereits Mengen von 0,2-2 Gew.-% genügen, um eine ausreichende Wirksamkeit zu erzielen.

Die thermoplastischen Polyester sind bekannt und handelsüblich oder sie können nach bekannten Polykondensationsverfahren der Technik hergestellt werden.

Die Herstellung der erfindungsgemässen Formmassen erfolgt ebenfalls nach in der Technik üblichen Methoden durch Einarbeiten der Zusätze in den thermoplastischen Polyester während oder nach der Polykondensation durch Zugabe zur der Reaktionsmasse bzw. durch Umgranulieren.

Es können auch weitere übliche Zusätze zugegeben werden, z.B. weitere Füllstoffe, wie Talk, Glimmer, Metallpulver, Kieselsäureaerosol, Kaolin, Calciumcarbonat, Dolomit, Magnesiumsulfat, Silikate oder Glaskugeln, anorganische oder organische Pigmente, optische Aufheller, Mattierungsmittel, Gleitmittel, Entformungshilfsmittel, kristallisationsfördernde Mittel, Antioxidantien, Lichtschutzmittel und Verarbeitungsstabilisatoren.

In den erfindungsgemässen Formmassen ist das Abtropfen der Schmelze beim Beflammen wirksam verhindert. Da nur geringe Mengen Xonotlit zugegeben werden müssen, bleiben die guten Zähigkeitseigenschaften der Formmassen weitgehend erhalten und andere mechanische Eigenschaften werden nur wenig verändert. Der Wassergehalt im Xonotlit wirkt sich trotzt der hohen Einarbeitungstemperaturen nicht schädlich auf den Polyester aus. Die Einarbeitung des Xonolits ist problemlos und es wird eine gleichmässige Verteilung in der Formmasse erzielt.

Die Formmassen können nach gebräuchlichen Formgebungsverfahren wie Giessen, Pressen, Spritzgiessen und Extrudieren zu Gebrauchsgegenständen aller Art verarbeitet werden. Beispiele für solche Gegenstände sind technische Apparateteile, Apparategehäuse, Haushaltgeräte, Sportgeräte, Elektroisolationen, Automobilteile, Schaltungen, Platten, Filme und Halbzeuge, die spanabhebend verformt werden können. Ein besonderes Anwendungsgebiet ist die Herstellung von Formkörpern bzw. Umhüllungen für die Elektrotechnik.

Die folgenden Beispiele erläutern die Erfindung näher.

*Beispiel 1-2*

In Poly-1,4-butylenterephthalat (PBT, Viskositätszahl nach DIN 53728/3 von 120 $cm^3/g$) werden mit Hilfe eines Labor-Kokneters bei einer Zylindertemperatur von 250°C die in nachfolgender Tabelle 1 angeführten Zusätze (Xonotlit VP 633-330, Quarzwerke GmbH, Frechen) eingearbeitet, und die Formmassen granuliert. Das Verwendete Xonotlit kann durch die Formel $Ca_6$, $Si_6$, $O_{17}$ $(OH)_2$ beschrieben werden. Es weist eine Schüttdichte von 0,135 $g/cm^3$ und eine spezifische Oberfläche nach BET (DIN 66132) von 90 $m^2/g$ auf.

Nach dem Trocknen der Formmassen erfolgt ihre Verarbeitung zu Formkörpern (125 × 12,5 × 1,6 mm für die Brennbarkeitsprüfung und 6 × 4 × 50 mm für die Schlagzähigkeitsprüfung) nach folgenden Bedingungen:

| | |
|---|---|
| Zylindertemperatur | 250°C |
| Werkzeugtemperatur | 80°C |
| Zykluszeit | 45 sec. |

Die Proben für die Brennbarkeit werden bei 70°C 7 Tage wärmebehandelt und anschliessend einer Brandprüfung gemäss UL-94 zugeführt (siehe Tabelle 2). An den Normkleinstäben erfolgt die Ermittlung der Schlagzähigkeit.

Man erkennt aus den Ergebnissen, dass durch den Zusatz von 0,75 Gew.-% Xonotlit das Abtropfen bei der Brennbarkeitsprüfung des 1,6 mm dicken Stabes verhindert werden kann. Durch den Zusatz der geringen Konzentration des Antitropfmittels kann ferner die Schlagzähigkeit der Formmasse auf einem guten Niveau gehalten werden.

*Beispiel 3-4*

In analoger Weise wie in den Beispielen 1-2 werden Formmassen mit den in Tabelle 1 angeführten Zusammensetzungen granuliert und daraus Formkörper hergestellt. Man erkennt auch in diesem Falle aus den Prüfergebnissen die positive Wirkung von Xonotlit auf das Ergebnis der Brennbarkeitsprüfung und zwar ohne nennenswerte Beeinträchtigung der Zähigkeitseigenschaften.

Tabelle 1

| Beispiel Nr. | Zusammensetzung | Brennbarkeit | Schlagzähigkeit DIN 53453 (kJ/m²) |
|---|---|---|---|
| 1 | 55,75 Gew.-% PBT<br>30,0 Gew.-% Glasfasern<br>9,0 Gew.-% Dekabromdiphenyloxid<br>4,50 Gew.-% $Sb_2O_3$<br>0,75 Gew.-% Xonotlit | V-0<br>nichttropfend | 29 |
| 2 | 56,5 Gew.-% PBT<br>30,0 Gew.-% Glasfasern<br>9,0 Gew.-% Dekabromdiphenyloxid<br>4,5 Gew.-% $Sb_2O_3$ | V-0<br>tropfend | 31 |
| 3 | 51,0 Gew.-% PBT<br>30,0 Gew.-% Glasfasern<br>12,5 Gew.-% Polytribromstyrol<br>5,0 Gew.-% $Sb_2O_3$<br>1,5 Gew.-% Xonotlit | V-0<br>nichttropfend | 26 |
| 4 | 52,5 Gew.-% PBT<br>30,0 Gew.-% Glasfasern<br>12,5 Gew.-% Polytribromstyrol<br>5,0 Gew.-% $Sb_2O_3$ | V-2<br>tropfend | 28 |

Tabelle 2 *UL 94-Prüfung Vertikaltest*

Proben: 5 Stück

Beflammung: In vertikaler Lage jeweils 2 × 10 sec mit einer 19 mm hohen Bunsenbrennerflamme

| Klasse | Brenndauer nach Entzug der Flamme an Einzelprobe | Totale Brenndauer nach 10 Beflammungen von 5 Proben | Fallende brennende Tropfen dürfen Watte entzünden | Glimmartige Brenndauer nach Entzug der zweiten Beflammung an Einzelprobe |
|---|---|---|---|---|
| V-0 | ≤ 10 | ≤ 50 | nein | ≤ 30 |
| V-1 | ≤ 30 | ≤ 250 | nein | ≤ 60 |
| V-2 | ≤ 30 | ≤ 250 | ja | ≤ 60 |

Zusatzbedingung für V-0, V-1 und V-2: keine Probe darf bis zur Halterung brennen oder glimmen

**Patentansprüche**

1. Verstärkte, flammwidrige Formmasse enthaltend neben üblichen Zusätzen einen Verstärkerfüllstoff, einen thermoplastischen Polyester und als flammhemmenden Zusatz organische Halogenverbindungen alleine oder zusammen mit einer Verbindung eines Elementes der fünften Hauptgruppe des Periodensystems, besonders von Phosphor oder Antimon, dadurch gekennzeichnet, dass die Formmasse, bezogen auf das Gesamtgewicht, 0,2-10 Gew.-% Xonotlit enthält.

2. Formmasse gemäss Anspruch 1, dadurch gekennzeichnet, dass sie das Xonotlit in einer Menge von 0,2-6 Gew.-% enthält, bezogen auf das Gesamtgewicht.

3. Formmasse gemäss Anspruch 2, dadurch gekennzeichnet, dass sie das Xonotlit in einer Menge von 0,2-4 Gew.-% enthält.

4. Formmasse gemäss Anspruch 1, dadurch gekennzeichnet, dass der thermoplastische Polyester ein Polyäthylen- oder Poly-1,4-butylenterephthalat oder ein Copolyester auf der Basis von Polyäthylen- oder Poly-1,4-butylenterephthalat ist.

5. Formmasse gemäss Anspruch 1, dadurch gekennzeichnet, dass der flammhemmende Zusatz in einer Menge von 5-30 Gew.-% enthalten ist, bezogen auf das Gesamtgewicht.

6. Formmasse gemäss Anspruch 5, dadurch gekennzeichnet, dass das Flammschutzmittel eine organische Chlor- oder Bromverbindung alleine oder zusammen in Kombination mit Antimontrioxid ist.

7. Formmasse gemäss Anspruch 1, dadurch gekennzeichnet, dass der Verstärkerfüllstoff in einer Menge von 5 bis 50, besonders 10-40 Gew.-% enthalten ist, bezogen auf das Gesamtgewicht.

8. Formmasse gemäss Anspruch 2, dadurch gekennzeichnet, dass der Verstärkerfüllstoff aus Glasfasern besteht.

9. Formmasse gemäss Anspruch 1, dadurch gekennzeichnet, dass sie 84,8-46 Gew.-% thermoplastischen Polyester, 5-20 Gew.-% flammhemmenden Zusatz, 10-30 Gew.-% Glasfasern und 0,2-4 Gew.-% Xonotlit enthält.

10. Verwendung der Formmasse gemäss Anspruch 1 zur Herstellung von geformten Gegenständen.

## Claims

1. A reinforced, flame-proofed moulding composition comprising, in addition to conventional additives, a reinforcing filler, a thermoplastic polyester and an organic halogen compound as flame-proofing additive, alone or together with a compound of an element of the 5th Main Group of the Periodic Table, preferably phosphorous and antimony, which moulding composition contains 0.2 to 10% by weight of xonotlite, based on the weight of the total composition.

2. A moulding composition according to claim 1, which contains 0.2 to 6% by weight of xonotlite, based on the weight of the total composition.

3. A moulding composition according to claim 2, which contains 0.2 to 4% by weight of xonotlite.

4. A moulding composition according to claim 1, wherein the thermoplastic polyester is a polyethylene terephthalate or poly-1.4-butylene terephthalate or a copolyester based on polyethylene terephthalate or poly-1.4-butylene terephthalate.

5. A moulding composition according to claim 1, which contains 5 to 30% by weight of the flame-proofing additive, based on the weight of the total composition.

6. A moulding composition according to claim 5, wherein the flame-proofing additive is an organic chloro or bromo compound, alone or in combination with antimony trioxide.

7. A moulding composition according to claim 1, which contains 5 to 50% by weight, preferably 10 to 40% by weight, of reinforcing filler, based on the weight of the total composition.

8. A moulding composition according to claim 7, wherein the reinforcing filler consists of glass fibres.

9. A moulding composition according to claim 1, which contains 84.8 to 46% by weight of a thermoplastic polyester, 5 to 20% by weight of a flame-proofing additive, 10 to 30% by weight of glass fibres and 0.2 to 4% by weight of xonotlite.

10. Use of a moulding composition as claimed in claim 1 for the manufacture of moulded articles.

## Revendications

1. Matière à mouler renforcée et ignifugée, qui contient, en plus d'additifs usuels, une charge de renforcement, un polyester thermoplastique et, en tant qu'additifs ignifugeants, des composés organiques halogénés, seuls ou associés à un composé d'un élément du cinquième groupe principal de la classification périodique, en particulier du phosphore ou de l'antimoine, matière caractérisée en ce qu'elle contient de 0,2 à 10% en poids de xonotlite par rapport à son poids total.

2. Matière à mouler selon la revendication 1, caractérisée en ce qu'elle contient la xonotlite en une quantité de 0,2 à 6% en poids par rapport à son poids total.

3. Matière à mouler selon la revendication 2, caractérisée en ce qu'elle contient la xonotlite en une quantité de 0,2 à 4% en poids.

4. Matière à mouler selon la revendication 1, caractérisée en ce que le polyester thermoplastique est un poly-(téréphtalate d'éthylène), un poly-(téréphtalate de butylène-1,4) ou un copolyester à base de poly-(téréphtalate d'éthylène) et de poly-(téréphtalate de butylène-1,4).

5. Matière à mouler selon la revendication 1, caractérisee en ce que l'additif ignifugeant s'y trouve en une quantité de 5 à 30% en poids par rapport au poids total.

6. Matière à mouler selon la revendication 5, caractérisée en ce que l'iginifugeant est un composé organique chloré ou bromé, seul ou associé au trioxyde d'antimoine.

7. Matière à mouler selon la revendication 1, caractérisée en ce que la charge de renforcement se trouve en une quantité de 5 à 50% en poids par rapport au poids total, en particulier de 10 à 40% en poids.

8. Matière à mouler selon la revendication 7, caractérisée en ce que la charge de renforcement est constituée de fibres de verre.

9. Matière à mouler selon la revendication 1, caractérisée en ce qu'elle contient de 84,8 à 46% en poids d'un polyester thermoplastique, de 5 à 20% en poids d'un additif ignifugeant, de 10 à 30% en poids de fibres de verre et de 0,2 à 4% en poids de xonotlite.

10. Application de la matière à mouler selon la revendication 1 pour la fabrication d'objets moulés.